Europäisches Patentamt

European Patent Office

Office européen des brevets

(11) Publication number: **0 398 406**
**A1**

## (12) EUROPEAN PATENT APPLICATION

(21) Application number: **90201015.6**

(22) Date of filing: **23.04.90**

(51) Int. Cl.5: **F16K 5/02**

(30) Priority: **19.05.89 IT 2110389**

(43) Date of publication of application:
**22.11.90 Bulletin 90/47**

(84) Designated Contracting States:
**AT BE CH DE DK ES FR GB GR IT LI LU NL SE**

(71) Applicant: **LA VALVOMECCANICA S.P.A.**
**Via Eugenio Curiel, 10**
**I-20026 Novate Milanese (Milano)(IT)**

(72) Inventor: **Vienna, Antonio**
**Via Correggio 19**
**I-20149 Milano(IT)**

(74) Representative: **Faraggiana, Vittorio, Dr. Ing.**
**Ingg. Guzzi e Ravizza S.r.l. Via Boccaccio, 24**
**I-20123 Milano(IT)**

(54) **Plug cock with plastic seal elements on the plug.**

(57) Cock (10) of the type having a body (11) in which is moulded a seat in which rotates a round solid plug (14) having a diametrical passage (19) which can be arranged in alignment with passages made in the seat for opening the cock or withdrawn from said alignment to close the cock, there being placed between the plug and the seat sealing means.

Said sealing means consist of plastic gaskets moulded in a plurality of recessed (16, 17, 18) made in the outer surface of the plug.

Fig.1

## PLUG COCK WITH PLASTIC SEAL ELEMENTS ON THE PLUG

In the valve field plug cocks are well known and consist of a body having an interior seat in which rotates a male insert of generally round solid form (truncated cone) with a diametrical hole which can be positioned in or outside the path of the fluid to be controlled by means of an external control device.

To improve the seal between the seat and the plug it has been proposed to use seal surfaces which cover the wall of the seat of the body in contact with the plug.

For heavy duty applications such as in industrial systems the seals are made of plastics which can be formed with good resistance to high temperatures, abrasion and -particularly in chemical plants - corrosive fluids.

On this subject there have long since been found particularly useful fluoridized resins, e.g. PTFE, FEP, Teflon, etc., due to their resistance to corrosive fluids. The embodiment of seals made of such materials is generally done by inserting in the body of the cock an integral sleeve or bush moulded therewith and appropriately shaped to comprise a sealing seat for the plug.

Unfortunately in case of damage to the seal surface, e.g. by wear, such a solution, while providing excellent sealing, requires disassembly and replacement of the entire body of the cock with obvious disadvantages due to the relatively long time required for the operation with resulting delay of return to full operation of the system of which it is a part. Furthermore, the need to keep a certain number of complete cocks in storage to ensure availability for replacements involves relatively high cost and space occupied.

The general object of the present invention is to obviate the above-mentioned shortcomings and provide a plug cock with innovative embodiment of the plastic seals, in particular fluoridized resins, in which the necessary replacements in the case of loss of seal between the plug and the associated seat in the body do not involve disassembly and replacement of the body of the cock but in which these operations are relatively fast and easy.

In view of said object it was sought to embody in accordance with the invention a cock of the type having a body in which there is formed a seat in which there turns a plug of round solid form having a diametrical passage which can be aligned with passages formed in the seat for opening of the cock or withdrawn from said alignment to close the cock there being placed between the plug and the seat sealing means characterizated in that said sealing means consist of plastic gaskets moulded in a plurality of recesses made in the outer surface of the plug.

To make clearer the explanation of the innovative principles of the present invention and its benefits as compared with the known art there is described below with the aid of the annexed drawings a possible embodiment as an example of the application of said principles. In the drawings:

FIG. 1 shows a cut-away perspective view of a cock embodied in accordance with the innovative principles claimed herein,

FIG. 2 shows a perspective view of a plug used in the cock of FIG. 1,

FIG. 3 shows a cross section view along a median plane perpendicular to the axis of the plug of FIG. 2, and

FIG. 4 shows a view of a variant embodiment similar to that of FIG. 3.

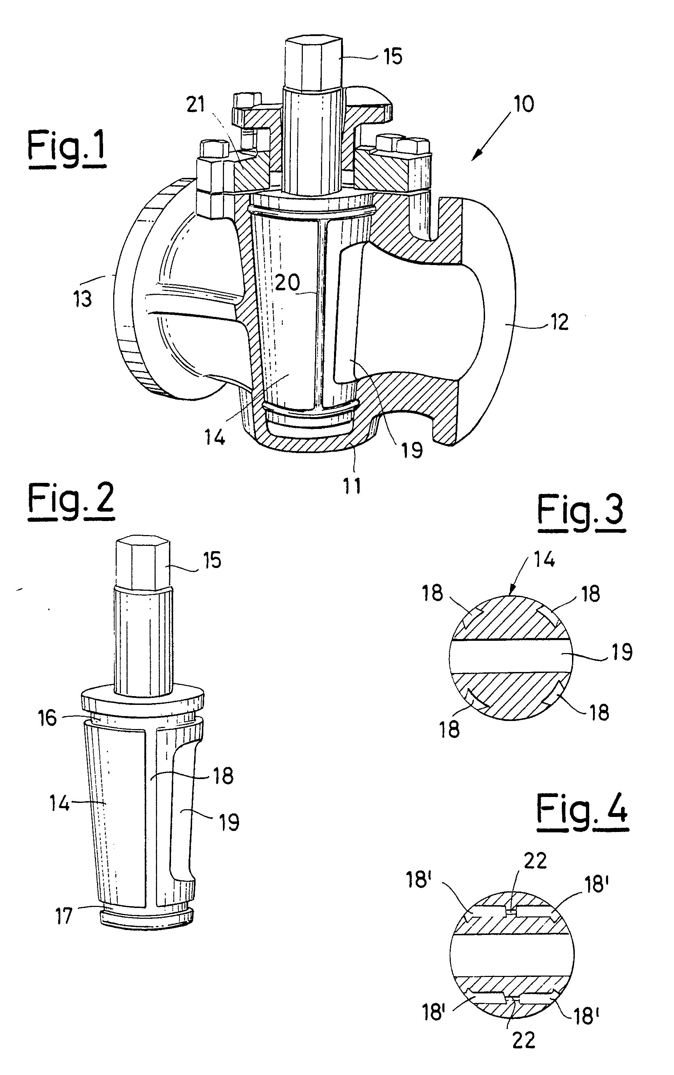

With reference to the figures, as shown in FIG. 1 a cock 10 comprises a body 11 with coupling flanges 12 and 13 containing in a seat designed for the purpose a plug 14 having the shape of a round solid (typically a truncated cone) turning around its axis through a drive 15 and drilled diametrically with a passage 19 for stopping or allowing the flow of a fluid depending on its angular position, and retained by a bonnet 21. Thus far the known art.

As shown in FIG. 2, in accordance with the invention the plug displays recesses on the circumference, upper 16 and lower 17, connected through longitudinal recesses 18 arranged along generating lines of the plug at the sides of the opening 19 for passage of the fluid through the plug. For example four vertical recesses can be embodied and arranged in positions every $90°$ along the circumference as can be clearly seen in FIG. 3.

In the recesses are moulded plastic materials, in particular fluoridized resins, e.g. selected from among PTFE, Teflon, PFA or FEP, etc., so as to create an unbroken sealing gasket 20 between the plug and the seat thereof in the body of the cock. To ensure good gripping of the resins in the recesses the latter can be shaped, e.g. with dove- tailed or angular cross section, as shown in FIG. 3 for the vertical recesses 18.

In addition there can be provided holes in the plug connecting the recesses so as to constitute, upon moulding the gasket, gripping grooves for it, as well as facilitating moulding. As shown for example in FIG. 4 the recesses can be created also by deep milling 18' and connected at the bottom by a plurality of channels 22. With a cock in accordance with the invention as described above, in case of breakage of the seals between the body and the plug, e.g. because of wear, it is sufficient to withdraw the plug and insert a new one without separating the body of the cock from the piping in which it is fitted, as is necessary in the known art, thus reducing down time.

The above description of an embodiment applying the innovative principles of the present invention is given here as an example and therefore is not to be considered as limiting the scope of the patent claimed here.

For example, the body of the cock can be shaped differently from the one shown in the drawings just as the plug can be shaped differently to adapt itself thereto as readily imaginable by a technician skilled in the art.

Furthermore the arrangement of the recesses and hence of the associated seals can be different from that shown in the drawings to adapt itself to the changed form of the plug and the seat thereof; basically the gaskets must develop circumferentially around the plug at both sides of the opening and surround at least one of the openings in the seat with the cock closed.

## Claims

1. Cock of the type having a body in which is moulded a seat in which rotates a round solid plug having a diametrical passage which can be arranged in alignment with passages made in the seat for opening the cock or withdrawn from said alignment to close the cock, there being placed between the plug and the seat sealing means, characterized in that said sealing means consist of plastic gaskets moulded in a plurality of recessed made in the outer surface of the plug.

2. Cock in accordance with claim 1 characterized in that the plurality of recesses comprises circumferential recesses near the two ends of the plug connected by longitudinal recesses arranged along the generating lines of the plug at the sides of the aperture of the diametrical passage therein.

3. Cock in accordance with claim 1 characterized in that the plastic is fluoridized resin.

4. Cock in accordance with claim 1 characterized in that the recesses have cross sections flared toward the axis of the plug for gripping the seals moulded therein.

5. Cock in accordance with claim 1 characterized in that between the recesses there are passages inside the plug which connect them together.

6. Cock in accordance with claim 2 characterized in that the longitudinal recesses are four in number and arranged in positions $90°$ apart around the circumference.

7. Cock in accordance with claim 3 characterized in that the fluoridized resin is selected from among FEP, PFA, PFT, Teflon, PVDF, PCTFE.

Fig.1

Fig.2

Fig.3

Fig.4

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | US-A-3133723 (GOLDMAN)<br>* column 5, lines 34 - 66; figure 4 * | 1, 2, 6 | F16K5/02 |
| Y | | 3, 7 | |
| | --- | | |
| X | FR-A-1202564 (BECK)<br>* page 1, right-hand column, lines 23 - 35; figures * | 1, 2, 6 | |
| | --- | | |
| Y | GB-A-2017265 (GARLOCK INC.)<br>* page 4, left-hand column, lines 14 - 27; figures 2, 5, 6 * | 3, 7 | |
| | --- | | |
| A | EP-A-0178052 (BABCOCK & WILCOX COMP.)<br>* page 1, lines 28 - 31; figures 5, 6 * | 3, 7 | |
| | --- | | |
| A | GB-A-1113192 (ROY)<br>* page 3, left-hand column, lines 6 - 16 * | 3, 7 | |
| | ----- | | |

TECHNICAL FIELDS
SEARCHED (Int. Cl.5 )

F16K

The present search report has been drawn up for all claims

| Place of search | Date of completion of the search | Examiner |
|---|---|---|
| THE HAGUE | 06 AUGUST 1990 | CHRISTENSEN J.T. |